# EUROPÄISCHE PATENTSCHRIFT

(11) **EP 0 596 297 B1**
(45) Veröffentlichungstag und Bekanntmachung des Hinweises auf die Patenterteilung: **20.05.1998**
(21) Anmeldenummer: 93116674.8
(22) Anmeldetag: 15.10.1993
(51) Int. Cl.: F02D 41/26, F02D 41/22

(54) **Verfahren und Vorrichtung zur Überprüfung einer Überwachungseinheit von Motorsteuersystem**
Method and apparatus for checking the monitoring unit of a control system for an engine
Méthode et dispositif pour tester une unité de surveillance de système de commande de moteur

(30) Priorität: 04.11.1992 DE 4237198
(43) Veröffentlichungstag der Anmeldung: 11.05.1994
(73) Patentinhaber: ROBERT BOSCH GMBH, 70442 Stuttgart (DE)
(72) Erfinder: Sorg, Dieter, Dipl.-Ing. (FH), D-75050 Gemmingen (DE)

(56) Entgegenhaltungen:
- EP-A- 0 242 822
- EP-A- 0 326 694
- DE-A- 3 728 561
- DE-A- 4 039 355
- US-A- 4 627 060

## Beschreibung

Die Erfindung betrifft ein Verfahren bzw. eine Vorrichtung zur Überprüfung einer Überwachungseinheit gemäß den unabhängigen Patentansprüchen.

Besonders im Rahmen der Fahrzeugtechnik bei der Verwendung von mikrocomputergesteuerten Systemen sind Überwachungseinheiten, z.B. sogenannte Watchdog-Schaltungen, vorgesehen, durch welche der Mikrocomputer bzw. die korrekte Programmabarbeitung überwacht wird. Dadurch soll die Betriebssicherheit des Systems gewährleistet werden, wobei jedoch vorausgesetzt wird, daß die Überwachungseinheit jederzeit fehlerfrei funktioniert. Da dies naturgemäß nicht immer der Fall sein kann, müssen Maßnahmen vorgesehen werden, mittels derer die Überwachungseinheit selbst überprüfbar ist. Dies wird beispielsweise in der DE-OS 40 39 355 beschrieben, wo ein Watch-Dog als Überwachungseinheit anhand einer vorgegebenen Impulsfolge durch Überprüfen von Amplitude, Frequenz und Impulsabstand im Rahmen eines Testzyklus überprüft wird. Diese Methode findet vorteilhaft dort Anwendung, wo der mit der Überwachungsschaltung verbundene Rechner über ausreichende Kapazitäten und Verarbeitungszeit verfügt. Bei Motorsteuerungen für Fahrzeuge ist die Rechnerbelastung jedoch hoch, so daß eine aufwendige Überprüfungsmethode der Überwachungseinheit nicht ohne weiteres durchführbar ist.

Es ist daher Aufgabe der Erfindung, Maßnahmen anzugeben, welche im Zusammenhang mit Motorsteuerungen für Fahrzeuge eine Überprüfung einer Uberwachungseinheit erlauben.

Dies wird durch die Kennzeichnenden Merkmale der unabhangigen Patentanspruch erreicht.

Aus der DE-OS 33 22 074 (US-PS 4 584 645) ist eine Überwachungsschaltung für einen Mikrocomputer bekannt, die bei Ausbleiben von Kontrollimpulsen ein Rücksetzsignal für den Mikrocomputer erzeugt und den Mikrocomputer von der Ansteuerung eines Stellglieds abschaltet.

Aus der DE-OS 33 27 376 sind Maßnahmen bekannt, das Steuersystem und den dort enthaltenen Mikrorechner nach Abschalten des Motors für eine vorgegebene sogenannte Nachlaufzeit weiterhin mit Strom zu versorgen.

Aus der deutschen Patentanmeldung DE-P 41 14 999.8 (siehe auch EP-A-512 240, stand der Technik nach Art. 54(3) EPÜ ist eine als Rechner oder als Schaltung ausgeführte Überwachungseinheit eines Mikrocomputers bekannt, die aus vom Rechner zugesandten Daten weitere Daten gemäß einer Prüffunktion ermittelt und die durch Vergleich des Ergebnisses mit dem vom Rechner auf der Basis derselben oder einer anderen Prüffunktion ermitteltem Ergebnis eine Fehlfunktion des Rechners ableitet. Diese Überprüfung findet während des Betriebs zu vorgegebenen Zeitpunkten statt, so daß die obengenannten Nachteile auftreten können.

Aus der DE-A 37 28 561 ist ein Verfahren zur Überprüfung einer Überwachungseinrichtung für einen Mikroprozessor bekannt, wobei der Mikroprozessor einen Fehler zur Überprüfung der Funktion der Überwachungseinrichtung simuliert. Die Überprüfung findet in regelmäßigen Zeitabständen statt. Zur Sicherstellung der Funktion des Normalbetriebs des Motorsteuersystems sind Maßnahmen vorgesehen, die eine Beeinflussung des Fahrbetriebs durch die Fehlersimulation vermeiden sollen.

### Vorteile der Erfindung

Die erfindungsgemäße Vorgehensweise erlaubt im Zusammenhang mit Motorsteuerungsgeräten die Überprüfung einer den Rechner überwachenden Überwachungseinheit.

Besonders vorteilhaft ist, daß die Überprüfung der Überwachungseinheit nach Abstellen des Motors erfolgt und somit den Mikrocomputer bei der Steuerung des Motors nicht beeinträchtigt.

Weiterhin ist vorteilhaft, daß die Überwachungseinheit mit jedem Abschalten des Motors vollständig überprüft wird, d. h. daß sowohl das Auftreten von Rücksetzimpulsen als auch das bei nicht ordnungsgemäß arbeitenden Mikrocomputer erfolgende Abschaltsignal auf sein Auftreten überprüft wird.

Weiterhin ist vorteilhaft, daß bei aufgetretenem Fehlerzustand eine Fehleranzeige in einem nichtflüchtigen Speicher abgelegt und beim nächsten Start des Motors berücksichtigt wird.

Ferner ist vorteilhaft, daß die erfindungsgemäße Vorgehensweise zur Überprüfung der Überwachungseinheit eine vollständige Überwachung der Überwachungseinheit und deren Funktion erlaubt, ohne daß aufwendige Vergleiche von Impulsfolgen, Amplituden und Signallängen vorzunehmen sind.

Besonders vorteilhaft ist, daß während des Betriebs keine Überprüfung vorgenommen werden muß. Weitere Vorteile ergeben sich aus der nachfolgenden Beschreibung von Ausführungsbeispielen und aus den Unteransprüchen.

### Zeichnung

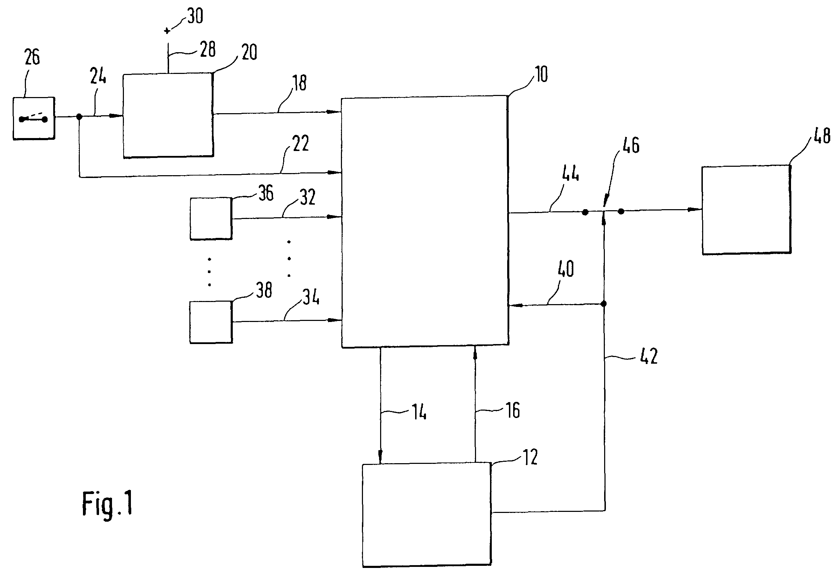

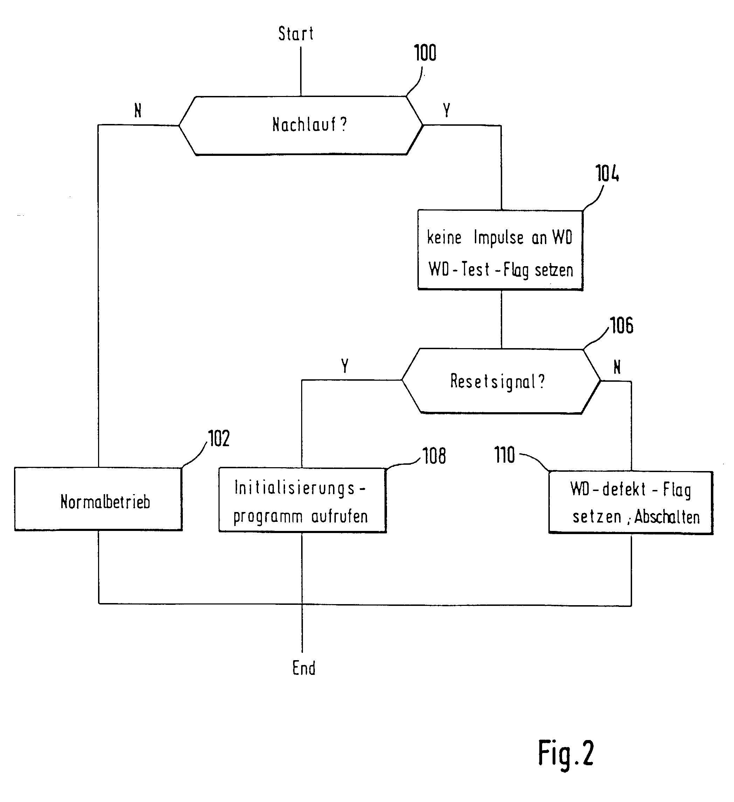

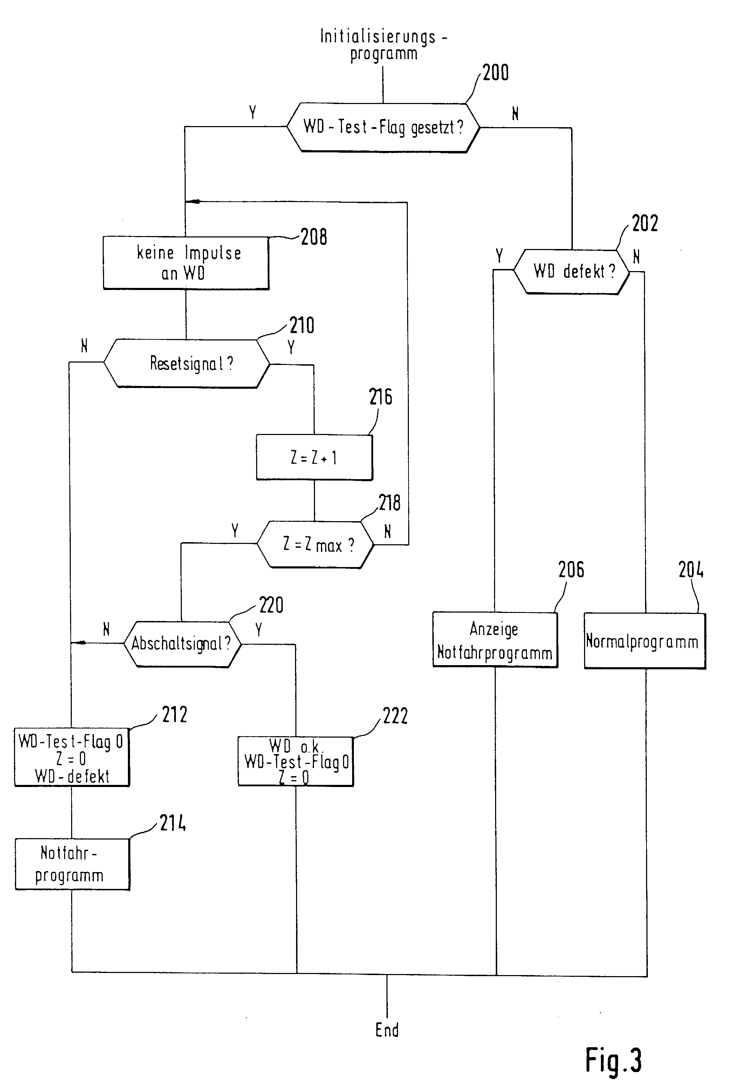

Figur 1 zeigt ein Übersichtsblockschaltbild eines Motorsteuersystems, bei welchem die erfindungsgemäße Vorgehensweise zur Anwendung kommt. Figur 2 und 3 stellen Flußdiagramme dar.

### Beschreibung von Ausführungsbeispielen

In Figur 1 ist ein Mikrocomputer 10 dargestellt, welcher von einer Überwachungsschaltung 12 überwacht wird. Zu diesem Zweck ist der Mikrocomputer 10 mit der Überwachungsschaltung 12 über seine Ausgangsleitung 14 sowie seine Eingangsleitung 16 verbunden. Ferner weist der Mikrocomputer 10 die Eingangsleitung 18 auf, welche ihn mit einer Nachlaufsteuerung 20 verbindet. Eine weitere Eingangsleitung 22 des Mikrocomputers 10 verbindet diesen mit der Leitung 24, welche den Zündschalter 26 mit der Nachlaufsteuerung 20 verbindet. Letztere ist über die Leitung 28 mit dem positiven Pol 30 der Versorgungsspannung verbunden ist. Der Mikrocomputer 10 weist darüber hinaus die Eingangsleitungen 32-34 auf, welchen ihn mit Meßeinrichtungen 36-38 zur Erfassung von Betriebsgrößen von Motor und/oder Fahrzeug verbinden. Ferner wird dem Mikrocomputer 10 über die Eingangsleitung 40 das auf der Ausgangsleitung 42 der Überwachungsschaltung 12 geführte Signal zugeführt. Der Mikrocomputer 10 verfügt ferner über die Ausgangsleitung 44, welche über eine symbolisch dargestellte Abschalteinrichtung 46 zu einem eine Betriebsgröße des Motors beeinflußende Stelleinrichtung 48 führt. Die Ausgangsleitung 42 der Überwachungsschaltung 10 ist auf die Abschalteinrichtung 46 zu deren Betätigung geführt.

Die Funktionsweise der Anordnung sei am Beispiel einer elektronischen Motorleistungssteuerung zur elektrischen Verstellung einer Drosselklappe dargestellt. Daneben kann ein vergleichbares System auch für Kraftstoffzumessung, Zündzeitpunktseinstellung, Getriebesteuerung etc. zuständig sein oder die Steuerung eines Dieselmotors oder Elektromotors übernehmen.

Im Normalbetrieb bei eingeschalteter Zündung bildet der Mikrocomputer in Abhängigkeit der ihm über die Leitungen 32-34 zugeführten Betriebsgrößen wie Motordrehzahl, Fahrgeschwindigkeit, Drosselklappenstellung, Motortemperatur, Fahrpedalstellung etc. ein Ansteuersignal für die Stelleinrichtung 48 zur Einstellung der Drosselklappe im Sinne eines auf der Basis dieser Betriebsgrößen gebildeten Sollwerts. Bei Abarbeitung des zur Bildung des Ansteuersignals vorhandenen Programms sendet der Mikrocomputer 10 zu vorgegebenen Zeitpunkten über die Leitung 14 Kontrollimpulse an die Überwachungsschaltung 12, welche diese registriert und bei korrektem Auftreten der Kontrollimpulse keine Reaktion auslöst. Bleiben die Kontrollimpulse für eine vorgegebene Zeit aus, so erzeugt die Überwachungsschaltung 12 über die Leitung 16 einen Rücksetzimpuls für den Mikrocomputer, der diesen in seinen Startzustand überführt und somit den Neustart des Systems ermöglicht. Bei nicht erfolgreichem Neustart und gegebenenfalls weiteren Neustartversuchen erkennt die Überwachungsschaltung 12 einen Defekt des Mikrocomputers und erzeugt zur Sicherstellung der Betriebssicherheit über die Leitung 42 ein Abschaltsignal für die Ansteuerung der Stelleinrichtung 48, was in Figur 1 symbolisch als Schaltelement 46 dargestellt ist. Dadurch wird das System in einen sicheren Zustand bei Defekt des Mikrocomputers 10 überführt.

Bei Abstellen des Motors und Öffnen des Zündschalters 26 hält die Nachlaufsteuerung 20 in der aus dem Stand der Technik bekannten Weise die Stromversorgung des Mikrocomputers 10 über die Leitung 18 aufrecht. Der Mikrocomputer selbst erkennt die Abschaltung des Motors beispielsweise anhand des über die Leitung 22 zugeführten Zündschaltersignals oder anhand der unter die Leerlaufdrehzahl abgefallenen Motordrehzahl. Dies ist Anlaß für den Mikrocomputer, das Überwachungsschaltungsüberprüfungsprogramm zu starten. Dieses sieht vor, keine Impulse über die Leitung 14 an die Überwachungsschaltung zu senden und die von der Überwachungsschaltung 12 erzeugten Rücksetzimpulse zu zählen. Bleiben die Rücksetzimpulse aus, wird ein Fehler der Überwachungsschaltung angenommen. Erreicht die Zahl der Rücksetzimpulse seinen vorgegebenen Maximalwert, so ist anhand des über die Leitung 40 zugeführten Signals vom Mikrocomputer zu überprüfen, ob die Überwachungsschaltung 12 wie vorgesehen ein Abschaltsignal erzeugt hat. Ist dies nicht der Fall, wird von einem Defekt der Überwachungsschaltung ausgegangen und eine entsprechende Marke gesetzt.

Die Flußdiagramme der Figuren 2 und 3 verdeutlichen, die Vorgehensweise zur Überprüfung der Überwachungsschaltung.

Nach Start des in Figur 2 dargestellten Programmteils, wird in einem ersten Schritt 100 überprüft, ob sich das System nach Abstellen des Motors in der sogenannten Nachlaufphase befindet. Ist dies nicht der Fall, wird gemäß Schritt 102 vom Normalbetrieb des Systems ausgegangen und der Programmteil beendet. Befindet sich das System jedoch in der Nachlaufphase, so wird gemäß Schritt 104 vom Mikrocomputer kein Kontrollimpuls an die Überwachungsschaltung gesendet und vom Rechner ein Watch-Dog-Test-Flag gesetzt. Im darauffolgenden Abfrageschritt 106 wird das Auftreten des Rücksetzsignals überprüft. Wird ein Rücksetzsignal erkannt, so wird gemäß Schritt 108 das Initialisierungsprogramm aufgerufen und der Programmteil beendet. Im anderen Fall, bei Nichtauftreten des Rücksetzsignals wird von einem Defekt der Überwachungsschaltung ausgegangen und gemäß Schritt 110 das Watch-Dog-Defekt-Flag gesetzt und der Programmteil beendet.

Bei einem Neustart des Systems wird das in einem nichtflüchtigen Speicher abgelegte Watch-Dog-Defekt-Flag ausgewertet.

Das im Schritt 108 aufgerufene Initialisierungsprogramm ist auszugsweise in Figur 3 skizziert.

Nach Start dieses Programmteils wird in einem ersten Schritt 200 überprüft, ob das Watch-Dog-Test-Flag gesetzt ist. Ist dies nicht der Fall, wird ein Start des Motors und damit des Systems erkannt und im darauffolgenden Schritt 202 das Watch-Dog-Defekt-Flag überprüft. Ist es nicht gesetzt, wird gemäß Schritt 204 mit dem Normalprogramm fortgefahren, während im gegenteiligen Fall gemäß Schritt 206 der Fehlerzustand der Überwachungsschaltung angezeigt wird, z.B. mittels Warnlampe, und ein Notfahrprogramm eingeleitet wird. Dieses kann beispielsweise aus einer Leistungsbegrenzung, einer Drehzahlbegrenzung oder Geschwindigkeitsbegrenzung bestehen. Danach wird der Programmteil beendet.

Wurde im Schritt 200 erkannt, daß das Watch-Dog-Test-Flag gesetzt ist (z.B. den Wert 1 aufweist), so wird mit Schritt 208 ein Watch-Dog-Testprogramm im Rahmen des Initialisierungsprogramms eingeleitet. Gemäß Schritt 208 wird die Übersendung von Kontrollimpulsen an die Überwachungsschaltung eingestellt und im Abfrageschritt 210 das Auftreten des dann von der Überwachungsschaltung zu erzeugenden Rücksetzsignals überprüft. Tritt das Rücksetzsignal nicht auf, so wird gemäß Schritt 212 das Watch-Dog-Test-Flag zurückgesetzt (Wert 0), ein Zähler Z auf 0 gesetzt und das Watch-Dog-Defekt-Flag gesetzt. Daraufhin wird im Schritt 214 aus Sicherheitsgründen vom Mikrocomputer ein Notfahrprogramm eingeleitet und der Programmteil beendet.

Wurde gemäß Schritt 210 das Auftreten eines Rücksetzsignals erkannt, so wird im Schritt 216 der Zähler um 1 erhöht und im darauffolgenden Abfrageschritt 218 überprüft, ob der Zählerstand seinen vorgegebenen Maximalwert erreicht hat. Ist dies nicht der Fall, wird der Programmteil mit Schritt 208 wiederholt. Hat der Zählerstand den Maximalwert erreicht, so wird im Abfrageschritt 220 überprüft, ob das bei korrekter Funktion von der Überwachungsschaltung erzeugte Abschaltsignal aufgetreten ist. Ist dies nicht der Fall, wird mit Schritt 212 und dem Setzen des Watch-Dog-Defekt-Flag mit folgendem Notfahrprogramm weitergefahren, während bei Auftreten des Abschaltsignals gemäß Schritt 222 die Überwachungsschaltung als funktionstüchtig erkannt, der Zähler auf 0 und das Watch-Dog-Test-Flag zurückgesetzt wird. Danach wird der Programmteil beendet.

Zusammenfassend ist festzustellen, daß die Überprüfung einer Überwachungsschaltung für ein Motorsteuerungssystem nach Abstellen des Motors erfolgt, wobei die Überprüfung der Überwachungsschaltung nicht notwendigerweise nach jedem Abschalten zu erfolgen hat. Dies ist lediglich eine besonders vorteilhafte Ausführungsform. In anderen vorteilhaften Ausführungen kann die Überprüfung der Überwachungsschaltung erst nach Ablauf einer vorgegebenen Betriebsdauer des Motors (z.B. > 10 h) oder eine vorgegebenen Laufleistung (z.B. > 1000 km) durchgeführt werden.

Die Vorgehensweise findet auch in vorteilhafter Weise Anwendung in Verbindung mit Mehrrechnersystemen.

Die bisher erläuterten Ausführungsbeispiele dienen dazu das Verständniss der im folgenden Ausführungsbeispiel beschriebenen Erfindung zu erleichtern.

Erfindungsgemäß wird in der Haltephase eine Überwachung des Rechners in der Art des Stand der Technik der DE-P 41 14 999.8 (EP-A-512 240, Stand der Technik nach Art 54 (3) EPÜ) vorgenommen werden, wobei vom Rechner ein Fehler simuliert und das korrekte Arbeiten der Uberwachungseinheit durch Auftreten des Notlaufsignals nach vorgegebener Zeit erkannt wird.

## Patentansprüche

1. Verfahren zur Überprüfung einer Überwachungseinheit für Motorsteuersysteme,
- wobei eine Recheneinheit oder ein Mikrocomputer (10) vorgesehen ist, der durch eine Überwachungseinheit (12) überwacht wird,
- wobei die Überwachungseinheit (12) durch die Recheneinheit (10) überprüft wird,
dadurch gekennzeichnet, daß
- die Stromversorgung der Recheneinheit (10) und der Überwachungseinheit (12) nach Abstellen des Motors aufrechterhalten wird und die Überprüfung der Überwachungseinheit (12) durch die Recheneinheit (10) nach Abstellen des Motors erfolgt,
- die Überwachungseinheit (12) die Recheneinheit (10) anhand von Vergleichen von Rechenergebnissen überwacht und
- die Überwachungseinheit (12) durch das Auftreten des Fehlersignals bei einer Fehlersimulation der Recheneinheit (10) überprüft wird.

2. Verfahren nach Anspruch 1, dadurch gekennzeichnet, daß das korrekte Arbeiten der Überwachungseinheit durch Auftreten eines Notlaufsignals nach vorgegebener Zeit nach der Fehlersimulierung erkannt wird.

3. Verfahren nach einem der vorhergehenden Ansprüche, dadurch gekennzeichnet, daß bei erneutem Start des Motors unter Auswertung einer den Fehlerzustand der Überwachungseinheit anzeigenden Marke bei erkanntem Fehlerzustand die Anzeige des Fehlerzustandes und vorzugsweise eine Notfahrbetrieb erfolgt.

4. Verfahren nach einem der vorhergehenden Ansprüche, dadurch gekennzeichnet, daß die Überprüfung der Überwachungseinheit nach jedem Abstellen des Motors oder bei Abstellen des Motors nach Ablauf einer vorgegebenen Betriebsdauer oder Laufleistung erfolgt.

5. Vorrichtung zur Überprüfung einer Überwachungseinheit für Motorsteuersysteme,
- mit einer Recheneinheit oder einem Mikrocomputer (10) zur Betätigung von wenigstens einer Stelleinrichtung (48),
- mit einer Überwachungseinheit zur Überwachung der Funktion des Mikrocomputers, sowie mit Mitteln zur Überprüfung der Überwachungseinheit (12),
gekennzeichnet durch
- Mittel zur Aufrechterhaltung der Stromversorgung der Recheneinheit oder des Mikrocomputers (10) nach Abstellen des Motors,
- Mittel der Überwachungseinheit (12), die die Recheneinheit (10) anhand von Vergleichen von Rechenergebnissen überwachen,
- Überprüfungsmittel, die die Überwachungseinheit (12) nach Abschalten des Motors überprüfen, und die die Überwachungseinheit (12) durch das Auftreten des Fehlersignals bei einer Fehlersimulation durch die Recheneinheit (10) überprüfen.

## Claims

1. Method for checking a monitoring unit for engine control systems,
- a computing unit or a microcomputer (10) being provided, which is monitored by a monitoring unit (12),
- the monitoring unit (12) being checked by the computing unit (10),
characterized in that
- the power supply to the computer unit (10) and to the monitoring unit (12) is maintained after the engine is switched off, and the checking of the monitoring unit (12) by the computing unit (10) is performed after the engine is switched off,
- the monitoring unit (12) monitors the computing unit (10) using comparisons of computing results and
- the monitoring unit (12) is checked by the occurrence of the fault signal during a fault simulation of the computing unit (10).

2. Method according to Claim 1, characterized in that the correct operation of the monitoring unit is detected by the occurrence of an emergency running signal after a predefined time following the fault simulation.

3. Method according to one of the preceding claims, characterized in that, when the engine is re-started, with evaluation of a marker indicating the fault state of the monitoring unit, if a fault state is detected the indication of a fault state and, preferably, an emergency driving operation are performed.

4. Method according to one of the preceding claims, characterized in that the checking of the monitoring unit is performed each time after the engine is switched off or each time the engine is switched off after the expiry of a predefined operating duration or running performance.

5. Apparatus for checking a monitoring unit for engine control systems,
- having a computing unit or a microcomputer (10) for actuating at least one actuating device (48),
- having a monitoring unit for monitoring the function of the microcomputer, and having means for checking the monitoring unit (12),
characterized by
- means for maintaining the power supply to the computing unit or to the microcomputer (10) after the engine is switched off,
- means of the monitoring unit (12), which monitor the - computing unit (10) using comparisons of computing results,
- checking means, which check the monitoring unit (12) after the engine is switched off and which check the monitoring unit (12) by the occurrence of the fault signal during a fault simulation by the computing unit (10).

## Revendications

1. Procédé pour contrôler une unité de surveillance pour des systèmes de commande de moteur,
- en prévoyant une unité de calcul ou un micro-ordinateur (10), qui est surveillé par une unité de surveillance (12),
- en contrôlant l'unité de surveillance (12) par l'unité de calcul (10),
caractérisé en ce que
- l'alimentation en courant de l'unité de calcul (10) et de l'unité de surveillance (12) est maintenue après l'arrêt du moteur et le contrôle de l'unité de surveillance (12) a lieu par l'unité de calcul (10) après l'arrêt du moteur,
- l'unité de surveillance (12) surveille l'unité de calcul (10) à partir de la comparaison des résultats de calcul et
- l'unité de surveillance (12) est contrôlée par la survenance du signal de défaut, lors d'une simulation de défaut de l'unité de calcul (10).

2. Procédé selon la revendication 1,
caractérisé en ce que
le fonctionnement correct de l'unité de surveillance est constaté par la survenance d'un signal de marche de secours au bout d'un temps prédéterminé après la simulation du défaut.

3. Procédé selon l'une des revendications précédentes,
caractérisé en ce que
lors du redémarrage du moteur l'indication et de préférence un fonctionnement en marche de secours a lieu en exploitant un repère indiquant l'état de défaut de l'unité de surveillance une fois constaté l'état de défaut.

4. Procédé selon l'une des revendications précédentes,
caractérisé en ce que
le contrôle de l'unité de surveillance a lieu après chaque arrêt du moteur ou lors de l'arrêt du moteur après le déroulement d'une durée de fonctionnement du moteur ou d'un parcours du véhicule prédéfini.

5. Dispositif servant à contrôler une unité de surveillance pour des systèmes de commande du moteur, comprenant:
- une unité de calcul ou un micro-ordinateur (10) servant à actionner au moins un dispositif de réglage (48),
- une unité de contrôle servant à contrôler le fonctionnement du micro-ordinateur, ainsi que des moyens pour contrôler l'unité de surveillance (12),
caractérisé par
- des moyens pour maintenir l'alimentation en courant de l'unité de calcul ou du micro-ordinateur (10) après l'arrêt du moteur,
- des moyens de l'unité de surveillance (12), qui surveillent l'unité de calcul (10) à partir de la comparaison des résultats du calcul,
- des moyens de contrôle, qui contrôlent l'unité de surveillance (12) après le débranchement du moteur, et qui contrôlent l'unité de surveillance (12) par la survenance du signal de défaut lors d'une simulation de défaut par l'unité de calcul (10).
